# EUROPÄISCHE PATENTSCHRIFT

(11) **EP 2 153 089 B1**
(45) Veröffentlichungstag und Bekanntmachung des Hinweises auf die Patenterteilung: **17.11.2010**
(21) Anmeldenummer: 08760056.5
(22) Anmeldetag: 27.05.2008
(51) Int. Cl.: F16H 61/30

(54) **SCHALTVORRICHTUNG FÜR KRAFTFAHRZEUG-WECHSELGETRIEBE**
SHIFTING DEVICE FOR A VARIABLE SPEED MOTOR VEHICLE TRANSMISSION
DISPOSITIF DE CHANGEMENT DE VITESSE POUR UNE BOÎTE DE VITESSES D'UN VÉHICULE À MOTEUR

(30) Priorität: 06.06.2007 DE 102007026422
(43) Veröffentlichungstag der Anmeldung: 17.02.2010
(73) Patentinhaber: ZF Friedrichshafen AG, 88038 Friedrichshafen (DE)
(72) Erfinder: FISCHER, Dieter, 88149 Nonnenhorn (DE); SPÄTH, Klaus, 88276 Berg (DE)
(86) Internationale Anmeldenummer: PCT/EP2008/056458
(87) Internationale Veröffentlichungsnummer: WO 2008/148663

(56) Entgegenhaltungen:
- EP-A- 1 630 460
- WO-A-2007/101754
- DE-A1- 3 147 003
- DE-A1- 19 539 472
- DE-A1- 19 840 052
- DE-A1-102004 042 609
- DE-A1-102006 006 651

## Beschreibung

Die Erfindung betrifft eine Schaltvorrichtung mit einer Servounterstützungseinrichtung nach der im Oberbegriff von Anspruch 1 näher definierten Art.

Bei derartigen Schaltvorrichtungen dient die Drehbewegung der Schaltstange zur Vorwahl der einzelnen Schaltgassen und erfordert im Allgemeinen keine hohen Schaltkräfte. Die axiale Längsbewegung der Schaltstange dient zum Einlegen des gewünschten Ganges und erfordert insbesondere bei Getrieben für schwere Fahrzeuge und solchen Fahrzeugen, deren Fahrersitz vom Getriebe entfernt angeordnet ist, größere Schaltkräfte.

Heutige Nutzfahrzeuge, wie Omnibusse und Lastkraftwagen, weisen mit ihrer Frontlenker-Bauweise räumliche Gegebenheiten für den Einbau des Getriebes auf, bei denen das Getriebe zwangsläufig weit vom Fahrersitz wegrückt. Besonders weit wird die Entfernung bei Fahrzeugen mit Unterflur- oder Heckmotoren. Durch das lange, bisweilen stramm laufende Schaltgestänge bei mechanisch geschalteten Getrieben wird der exakte Gangwechsel oft erschwert.

Damit der Fahrer eines Kraftfahrzeuges seine Aufmerksamkeit voll dem Straßenverkehr zuwenden kann, muss er in allen Tätigkeiten, die zum Führen eines Kraftfahrzeuges notwendig sind, so weit wie möglich entlastet und unterstützt werden.

Jeder Kraftfahrer weiß, wie entscheidend die einwandfreie Bedienung des Schaltgetriebes in schwierigen Verkehrssituationen sein kann. Pneumatische Schalthilfen für Nutzfahrzeuge aller Größenordnungen können hier Abhilfe schaffen.

Bisher bekannte Servoschaltvorrichtungen sind teilweise direkt an das Getriebe angebaut und besitzen eine von außen zugängliche Steuerstange und Kolbenstange. Das Schaltgestänge ist mit der Steuerstange verbunden. Über eine Längsbewegung der Steuerstange wird die Unterstützung aktiviert. Diese Art der Ansteuerung findet man in Verbindung mit zwei Stangen- oder Kabelzugschaltungen. Nachteilig ist hierbei die Abdichtung der Steuer- und Kolbenstange über Faltenbälge und die fehlende Schmierung. Im Lkw ist diese Stelle starker Verschmutzung ausgesetzt. Bei Änderung der Schaltgestängeübersetzung ändert sich auch der Beginn der Servounterstützung bzw. diese muss durch Modifikation des Ventils an die Gestängeübersetzung angepasst werden. Das gleiche gilt auch für Schalthilfen, welche aus einem voneinander getrennten Ansteuerventil und Servozylinder bestehen. Ventil und Zylinder sind über Kugelgelenke mit dem Schalthebel und einer Konsole, welche wiederum am Getriebe befestigt ist, verbunden. Diese Anordnung hat zusätzlich noch den Nachteil, dass sich bei jeder Schaltung die Teile relativ zum Getriebe und Fahrzeugrahmen bewegen und somit die Luftleitungen, mit denen Ventil und Zylinder miteinander verbunden sind, durchscheuern können.

Es sind derartige pneumatische Schalthilfen in aufgelöster Bauweise bekannt, die aus einem mechanisch-pneumatischen Steuerteil und einem separaten, pneumatischen Kraftteil bestehen. Eine Schalthilfe in aufgelöster Bauweise ist aus Loomann; Zahnradgetriebe; 2. Auflage; Springer Verlag; 1988; S. 225 bekannt. Der Steuerteil ist ein mechanisch betätigtes Steuerventil, das vom Schaltgestänge betätigt wird. Die Übertragung der Wählbewegung beim Gangwechsel geschieht dabei mechanisch direkt auf das Getriebe. Bei der Übertragung der Schaltbewegung wird das Steuerventil betätigt und gleichzeitig die Handschaltkraft mechanisch über einen Hebel auf das Getriebe übertragen. Die Handschaltkraft wird dabei von einem Druckluftzylinder zusätzlich pneumatisch unterstützt. Dieser Druckluftzylinder bildet dabei als ein Zweistellungs-Zylinder mit integriertem hydraulischem Dämpfer den pneumatischen Kraftteil. Eine direkte proportionale Abbildung der Handschaltkraft wird hier nicht erreicht. Die Wege zwischen Steuerteil und Kraftteil sind lang und der Anbau ist platzraubend. Beschädigungen der Druckluftleitungen zwischen Steuerteil und Kraftteil können nicht vermieden werden.

In der DE 195 39 472 A1, welche alle Merkmale des Oberbegriffs des Anspruchs 1 offenbart, wird eine Schaltvorrichtung mit einer Servounterstützungseinrichtung für ein Getriebe eines Kraftfahrzeugs offenbart. Eine Steuerstange der Servounterstützungseinrichtung ist axial verschiebbar innerhalb einer Kolbenstange vorgesehen und wirkt über ein Schaltgestänge mit einem Schalthebel zusammen. An der Kolbenstange ist ein beidseitig mit einem Druckmittel beaufschlagbarer Kolben angeordnet, und die Kolbenstange wirkt mit Mitteln zum Schalten des Zahnräderwechselgetriebes zusammen. Bei einer Axialverstellung der Steuerstange in der Kolbenstange sind über Betätigungskolben Steuerventile betätigbar. Die über Schalthebel und Schaltgestänge auf die Steuerstange ausgeübte Schaltkraft wird über die Kolbenstange auf die Mittel zum Schalten des Zahnräderwechselgetriebes proportional übertragen. Dabei geben die beiden Seiten der Schalteinrichtung unterschiedlich große Schaltkräfte ab, so dass verschiedene Gangstufen des Fahrzeuggetriebes mit unterschiedlichen Schaltkräften geschaltet werden können. Die unterschiedlichen Schaltkräfte werden durch unterschiedliche Ventilkennlinien, bedingt durch unterschiedlich große Kolbenflächen der Betätigungskolben und/oder durch unterschiedliche geometrische Abmessungen der beiden entgegengesetzt angeordneten Oberflächen des Kolbens erzielt.

Aus der DE 10 2006 006 651 A1, veröffentlicht nach dem Prioritätsdatum der vorliegenden Erfindung, ist eine Schaltvorrichtung mit einer Servounterstützungseinrichtung für ein Getriebe eines Fahrzeugs bekannt geworden, welche Mittel zum Schalten und Wählen einer Gangstufe eines Getriebes und eine Steuerstange der Servounterstützungseinrichtung umfasst, auf die eine zu unterstützende Handschaltkraft einwirkt. In der Schaltvorrichtung sind elastische Elemente vorgesehen, um die auf die Servounterstützungseinrichtung einwirkende Handschaltkraft vor der Einleitung in die Servounterstützungseinrichtung zu verändern oder zu begrenzen.

Die DE 10 2006 006 652 A1 bzw. das entsprechende Familienmitglied WO-A1- 2007/101754, welche nach dem Prioritätsdatum der vorliegenden Erfindung veröffentlicht worden sind, offenbaren ebenfalls eine Schaltvorrichtung mit einer Servounterstützungseinrichtung für ein Getriebe eines Fahrzeugs, welche Mittel zum Schalten und Wählen einer Gangstufe eines Getriebes und eine Steuerstange der Servounterstützungseinrichtung umfasst, auf die eine zu unterstützende Handschaltkraft einwirkt. In der Schaltvorrichtung sind Federelemente vorgesehen, um die auf die Servounterstützungseinrichtung einwirkende Handschaltkraft innerhalb der Servounterstützungseinrichtung vor und/oder während der Erzeugung der Servounterstützungskraft zu verändern.

Um unterschiedliche Servounterstützungskräfte zu realisieren, benötigt man unterschiedliche Nachgiebigkeiten oder Elastizitäten. Dies kann je nach konstruktiver Ausführung aufwendig sein und Bauraum benötigen, welcher oftmals nicht zur Verfügung steht.

In der DE 10 2004 042 609 A1 werden Kennlinien für eine Servounterstützungseinrichtung einer Schaltvorrichtung eines Kraftfahrzeuggetriebes vorgeschlagen. Die Kennlinien weisen abhängig von einer Handschaltkraft bzw. einer Schaltungsphase Bereiche mit unterschiedlicher Steigung bzw. Proportionalität zur Handschaltkraft auf. In der DE 10 2004 042 609 A1 wird nicht offenbart, wie die Kennlinien konstruktiv realisiert werden können.

Der vorliegenden Erfindung liegt die Aufgabe zugrunde, eine Schaltvorrichtung mit Servounterstützungseinrichtung aufzuzeigen, mit welcher eine Servokennlinie, die abhängig von einer Handschaltkraft bzw. einer Schaltungsphase Bereiche mit unterschiedlicher Steigung bzw. Proportionalität zur Handschaltkraft aufweist, wegunabhängig realisiert werden kann und bei welcher ohne zusätzlichen Bauraum jeder Gasse bzw. jedem Gang eine entsprechende Servounterstützungskraft zugeordnet werden kann.

Die der Erfindung zugrunde liegende Aufgabe wird durch eine, auch die kennzeichnenden Merkmale des Hauptanspruchs aufweisende, gattungsgemäße Schaltvorrichtung gelöst.

Die erfindungsgemäße Schaltvorrichtung mit Servounterstützungseinrichtung, insbesondere für ein Getriebe eines Kraftfahrzeugs, umfasst Mittel zum Wählen und Schalten einer Gangstufe des Getriebes und ein Element, auf das eine zu unterstützende Handschaltkraft einwirkt. Dieses Element kann beispielsweise als Steuerstange der Servounterstützungseinrichtung ausgebildet sein. Erfindungsgemäß umfasst die Servounterstützungseinrichtung Mittel zur Darstellung einer Kennlinie, welche in Abhängigkeit der Handschaltkraft bzw. einer Schaltungsphase Bereiche mit unterschiedlicher Steigung bzw. Proportionalität zur Handschaltkraft aufweist, und es ist eine Wegbegrenzung in der Ansteuerung der Servounterstützungseinrichtung sowie mindestens eine Nachgiebigkeit vor und/oder in der Servounterstützungseinrichtung vorgesehen, um eine Servounterstützungskraft wegabhängig für jede Gasse bzw. jeden Gang zu begrenzen.

Die Mittel zur Darstellung der Kennlinie sind derart in der Servounterstützungseinrichtung angeordnet, dass die Kennlinie durch einen auf die Mittel wirkenden Servodruck wegunabhängig realisiert werden kann, also ohne dass sich die gegenwärtige Position der Steuerstange verändert.

Durch die Wegbegrenzung in der Ansteuerung der Servounterstützungseinrichtung wird eine Begrenzung der Relativbewegung zwischen der Steuerstange und einer Kolbenstange der Servounterstützungseinrichtung realisiert. Die Wegbegrenzung ist derart ausgebildet, dass eine Servokennlinie und somit eine Servounterstützungskraft bedingt genutzt werden kann, wodurch sich für jede Gasse bzw. jeden Gang eine entsprechende Servounterstützungskraft erreichen lässt. Hierbei kann beispielsweise eine Servokennlinie verwendet werden, welche durch eine Nachgiebigkeit in den Bauteilen vor bzw. in der Servounterstützungseinrichtung oder aus deren Kombination gebildet wird. Beispielsweise kann die Nachgiebigkeit durch ein Federelement realisiert werden, welches an der Steuerstange der Servounterstützungseinrichtung angeordnet ist.

Des Weiteren weist die erfindungsgemäße Schaltvorrichtung eine Schaltwelle und eine Hohlwelle auf. Die Servounterstützungseinrichtung weist ein Ventil auf, welches einen Ventilkolben und einen Ventilschieber umfasst und die Kolbenstange der Servounterstützungseinrichtung wirkt mit Mitteln zum Schalten des Getriebes zusammen.

Ferner sind die Mittel zur Darstellung der Servokennlinie als ein mit dem Ventil zusammenwirkender Schleppkolben und eine mit dem Schleppkolben in Verbindung stehende Schleppkolbenfeder ausgebildet. Die Schleppkolbenfeder kann beispielsweise als Spiralfeder oder als Tellerfeder ausgebildet sein.

Des Weiteren ist der Schleppkolben innerhalb der Kolbenstange derart angeordnet, dass der Schleppkolben die Steuerstange und den Ventilkolben radial umgibt und an einem Anschlag der Kolbenstange anliegt. Die Schleppkolbenfeder liegt einerseits an einem Anschlag der Kolbenstange an und steht andererseits mit dem Schleppkolben in Verbindung.

Beispielsweise kann der Schleppkolben in Form eines Hohlzylinders ausgebildet sein, welcher in betätigtem Zustand auf ein auf der Steuerstange angeordnetes Anschlagelement wirkt. Ebenso ist es denkbar, dass der Schleppkolben in Form eines Hohlzylinders ausgebildet ist und an der der Schleppkolbenfeder gegenüberliegenden Seite einen in Richtung zur Steuerstange hin ausgebildeten Anschlag aufweist, wobei der Schleppkolben in betätigtem Zustand mit seinem Anschlag am Ventilkolben anliegt. Ab einer bestimmten Handschaltkraft wird ein geregelter Servodruck so groß, dass der Schleppkolben gegen die Schleppkolbenfederkraft auf den Ventilkolben bzw. auf das auf der Steuerstange angeordnete Anschlagelement gedrückt wird, was den betätigten Zustand des Schleppkolbens darstellt. Der Handschaltkraft bzw. Steuerstangenkraft wirkt somit sowohl die auf den Ventilkolben direkt wirkende Druckkraft entgegen, als auch die Druckkraft, welche über den Schleppkolben auf den Ventilkolben bzw. auf das an der Steuerstange angeordnete Anschlagelement übertragen wird. Somit wird ab einer bestimmten Regelstellung die der Handschaltkraft bzw. Steuerstangenkraft entgegenwirkende Druckkraft entsprechend vergrößert. Dadurch weist die Kennlinie einen Knickpunkt auf, ab welchem sie eine kleinere Steigung aufweist und somit flacher verläuft. Je nach Auslegung der Schleppkolbenfeder kann der Knickpunkt der Kennlinie entsprechend festgelegt werden.

In einer besonders vorteilhaften Ausführungsform der erfindungsgemäßen Schaltvorrichtung sind in der Servounterstützungseinrichtung Mittel vorhanden, durch welche die Servounterstützungskraft auf zumindest zwei unterschiedliche Servokraftniveaus begrenzbar ist.

In einer bevorzugten Ausführungsform der erfindungsgemäßen Schaltvorrichtung ist die Wegbegrenzung in der Ansteuerung der Servounterstützungseinrichtung durch eine Nut in der Hohlwelle und mindestens einen die Nut durchdringenden Stift realisierbar.

In einer weiteren Ausführungsform der erfindungsgemäßen Schaltvorrichtung ist die Wegbegrenzung in der Ansteuerung der Servounterstützungseinrichtung durch eine Nut in der Schaltwelle und mindestens einen die Nut durchdringenden bzw. in die Nut eingreifenden Stift realisierbar.

Die Nut in der Hohlwelle bzw. in der Schaltwelle kann hierbei derart ausgebildet sein, dass in axialer Richtung der Schaltwelle für jede Gasse bzw. jeden Gang ein unterschiedlich großes Verdrehspiel zwischen dem Stift und der Nut vorherrscht. Beispielsweise können die Verdrehspiele der einen Seite der Nut andere Maße aufweisen als die Verdrehspiele auf der gegenüberliegenden Seite der Nut zur Abbildung unterschiedlicher Servounterstützungskräfte bei unterschiedlichen Schaltpositionen in der gleichen Schaltgasse des Getriebes.

In einer weiteren Ausführungsform wird eine Begrenzung der Relativbewegung zwischen der Steuerstange und der Kolbenstange der Servounterstützungseinrichtung über eine Bohrung in der Schaltwelle realisiert, beispielsweise eine Schwenkbohrung. Durch diese Bohrung entstehen zwischen der Schaltwelle und einem in der Bohrung angeordneten Stift entsprechende Spiele, wodurch zwischen der Schaltwelle und der Hohlwelle entsprechende Verdrehspiele entstehen und die Servounterstützungskraft entsprechend begrenzt werden kann.

Durch die Wegbegrenzung wird somit eine mechanische Überbrückung der Servounterstützungseinrichtung ermöglicht, wodurch die Servounterstützungskraft gassen- bzw. gangabhängig begrenzt werden kann. Die Wegbegrenzung der Steuerstange der Servounterstützungseinrichtung kann auch an einer anderen Stelle in der Schaltvorrichtung bzw. der Schaltanlage realisiert werden und dadurch konstruktiv anders ausführbar sein.

Durch die erfindungsgemäße Schaltvorrichtung mit Servounterstützungseinrichtung lässt sich somit eine "geknickte" Servokennlinie realisieren, ohne dass sich die Position der Steuerstange verändert, wobei über die in der Ansteuerung der Servounterstützungseinrichtung vorhandene Wegbegrenzung die Betätigung der Steuerstange der Servounterstützungseinrichtung relativ zur Kolbenstange weg- bzw. gangabhängig begrenzt werden kann, wodurch sich eine entsprechende Servounterstützungskraft weg- bzw. gangabhängig realisieren lässt.

Somit kann mit der erfindungsgemäßen Schaltvorrichtung mit Servounterstützungseinrichtung zu Beginn einer Schaltung eine ausreichende Servounterstützungskraft gewährleistet werden, wobei während einer Synchronphase eine Servounterstützungskraft erzeugbar ist, welche die an der Schaltung beteiligten Bauteile bzw. die Synchronisierungen nicht überlastet. Die erfindungsgemäße Schaltvorrichtung kann beispielsweise in Getrieben mit Schaltgestänge oder Kabelzugschaltung Anwendung finden.

Im Folgenden wird das Grundprinzip der Erfindung, welche mehrere Ausführungsformen zulässt, an Hand einer Zeichnung beispielhaft näher erläutert.

Es zeigen:
- Fig. 1: eine Schaltanlage nach dem Stand der Technik,
- Fig. 2: eine Schnittdarstellung einer Ausführungsform der Schalt- vorrichtung,
- Fig. 3: eine Schnittdarstellung einer weiteren Ausführungsform der Schaltvorrichtung,
- Fig. 4: eine Schnittdarstellung einer weiteren Ausführungsform der Schaltvorrichtung,
- Fig. 5: eine Schnittdarstellung einer Ausführungsform der Ser- vounterstützungseinrichtung,
- Fig. 6: eine Schnittdarstellung einer weiteren Ausführungsform der Servounterstützungseinrichtung,
- Fig. 7: eine Schnittdarstellung einer Ausführungsform der Ser- vounterstützungseinrichtung zur Realisierung von zwei un- terschiedlichen Servokraftniveaus und
- Fig. 8: eine Schnittdarstellung einer Ausführungsform der Ser- vounterstützungseinrichtung zur Realisierung von drei un- terschiedlichen Servokraftniveaus.

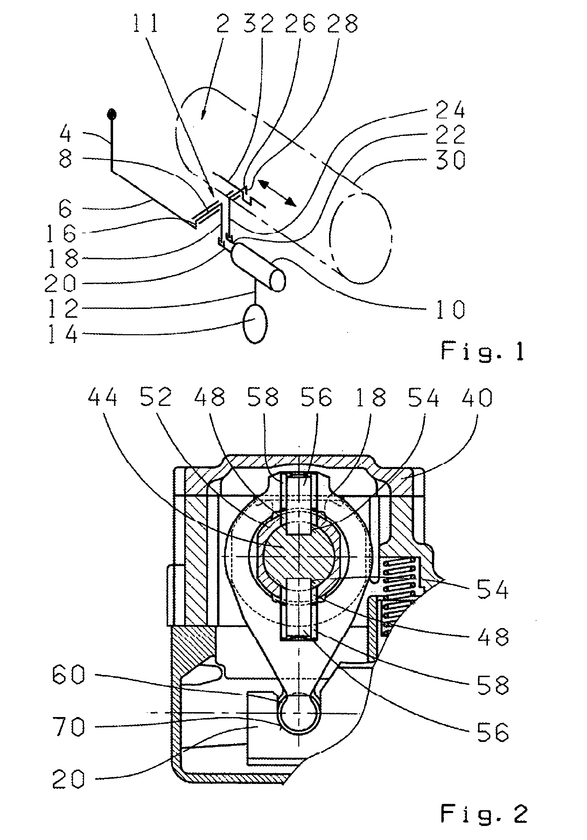

Die Fig. 1 zeigt in einer Skizze die Schaltanlage 2 eines Kraftfahrzeuges nach dem Stand der Technik. Von einem Schalthebel 4 aus führt eine Schaltstange 6 über eine Hebelumlenkung 8 zu einer Schaltvorrichtung 11 mit einer pneumatischen Servounterstützungseinrichtung 10. Die pneumatische Servounterstützungseinrichtung 10 weist eine Anschlussleitung 12 auf, die zu einem Vorratsbehälter 14 führt, aus dem die pneumatische Servounterstützungseinrichtung 10 mit Druckluft versorgt wird. Die Hebelumlenkung 8 weist einen ersten Hebel 16 auf, der mit der Schaltstange 6 vorzugsweise gelenkig verbunden ist. Die Hebelumlenkung 8 weist einen zweiten Hebel 18 auf, der wiederum in eine Steuerstange 20 eingreift, die in der pneumatischen Servounterstützungseinrichtung 10 angeordnet ist. Weiterhin ist in der pneumatischen Servounterstützungseinrichtung 10 eine Kolbenstange 22 vorgesehen, in die ein Hebel 24 eingreift, welcher über eine drehbare Schaltwelle 26 mit einem Hebel 28 im Fahrzeuggetriebe 30 verbunden ist. Der Hebel 28 greift in eine Schaltschiene 32 ein, durch die in bekannter Weise Übersetzungsverhältnisse des Getriebes geschaltet werden können. Eine Bewegung des Hebels 24 wird über die Schaltwelle 26 in eine Bewegung des Hebels 28 übertragen, so dass der Hebel 28 die Schaltschiene 32 in eine axiale Bewegung versetzen kann. Bei dieser Bewegung nimmt die Schaltschiene 32 vorzugsweise drei Positionen ein, zwei axiale Endpositionen, die je einem geschalteten Übersetzungsverhältnis entsprechen und eine zwischen den Endpositionen liegende Mittelposition, die einer Neutralstellung des Getriebes entspricht.

Die Fig. 2 zeigt die erfindungsgemäße Schaltvorrichtung 40 in einer Schnittdarstellung. Eine Schaltwelle 44 ist um ihre Achse drehbar innerhalb einer Hohlwelle 52 gelagert. Die Hohlwelle 52 ist innerhalb der Schaltvorrichtung 40 um die Achse der Schaltwelle 44 drehbar gelagert. Die Schaltwelle 44 weist an ihrem Umfang entlang ihrer Achse vorgesehene Nuten 54 auf. In diese Nuten 54 in der Schaltwelle 44 greifen Stifte 56 ein, die in Nadelbüchsen 58 im Hebel 18 drehbar gelagert sind. Die Stifte 56 sind derart in den Nuten 54 angeordnet, dass eine axiale Verschiebung der Schaltwelle 44 entlang ihrer Achse ermöglicht ist und eine Verdrehung der Schaltwelle 44 um ihre Achse ein Verschwenken des Hebels 18 auslöst.

Der Hebel 18 greift mit einer Rolle 60, die beispielsweise auf einem Bolzen leicht drehbar angeordnet ist, in eine Tasche 70 in der Steuerstange 20 ein und ermöglicht eine reibungsarme Übertragung der Handschaltkraft auf die pneumatische Servounterstützungseinrichtung 10. Eine von der Servounterstützungseinrichtung 10 erzeugte Servounterstützungskraft wird von der Kolbenstange 22 auf den Hebel 24 (siehe Fig. 1) und von dort auf die Hohlwelle 52 übertragen.

Durch eine Wegbegrenzung in der Ansteuerung der Servounterstützungseinrichtung 10 können unterschiedliche Servounterstützungskräfte erzeugt werden. Die Wegbegrenzung ist hier derart ausgebildet, dass zwischen der Schaltwelle 44 und der Hohlwelle 52 entsprechende Verdrehspiele vorherrschen, welche durch Nuten 48 in der Hohlwelle 52 und Stifte 56 realisiert werden. Durch eine entsprechende Ausgestaltung der Nut 48 in der Hohlwelle 52 können zwischen der Schaltwelle 44 und der Hohlwelle 52 unterschiedliche Verdrehspiele vorherrschen. Die Servounterstützungskraft wird solange erzeugt, bis das Verdrehspiel zwischen der Schaltwelle 44 und der Hohlwelle 52 aufgehoben ist. Dann wird die Handschaltkraft direkt auf die Hohlwelle 52 übertragen und die Steuerstange 20 macht relativ zur Kolbenstange 22 der Servounterstützungseinrichtung 10 keinen Weg mehr. Bei dieser Ausführungsform sind die Hohlwelle 52 und der Hebel 18 derart angeordnet, dass sie axial zueinander verschiebbar sind.

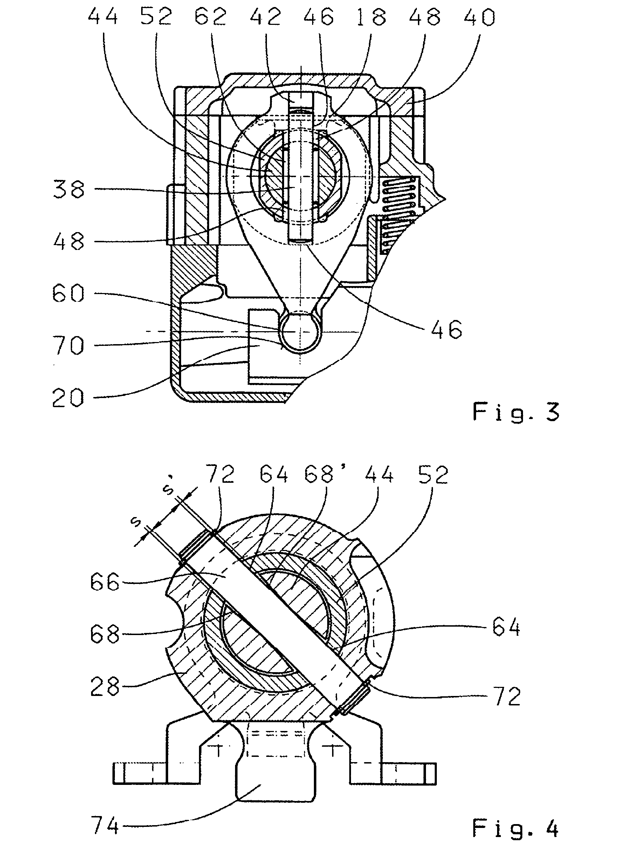

Die Fig. 3 zeigt die Schaltvorrichtung 40 in einer weiteren Ausführungsform. Im Unterschied zu der Ausführungsform der Fig. 2 weist diese Ausführungsform einen Stift 38 auf, welcher fest oder über Lager 62 in der Schaltwelle 44 angeordnet ist. Der Hebel 18 weist zwei durchgehende axiale Nuten 46 sowie eine Bohrung 42 auf. Der Stift 38 ist derart in den Nuten 46 angeordnet, dass eine axiale Verschiebung der Schaltwelle 44 entlang ihrer Achse ermöglicht ist und eine Verdrehung der Schaltwelle 44 um ihre Achse ein Verschwenken des Hebels 18 auslöst. Über die Bohrung 42 wird die Montage des Stifts 38 ermöglicht. Die Hohlwelle 52 und die Schaltwelle 44 sind derart angeordnet, dass sie axial zueinander verschiebbar sind, wobei vorzugsweise die Schaltwelle 44 axial verschiebbar und die Hohlwelle 52 axial nicht verschiebbar angeordnet ist. Die Wegbegrenzung in der Ansteuerung der Servounterstützungseinrichtung 10 ist derart ausgebildet, dass zwischen der Schaltwelle 44 und der Hohlwelle 52 entsprechende Verdrehspiele vorherrschen, welche durch die Nuten 48 in der Hohlwelle 52 und den Stift 38 realisiert werden.

Die Fig. 4 zeigt einen Schnitt durch die Schaltwelle 44 im Bereich des Hebels 28, der mit Fortsätzen 74 in hier nicht gezeigte Schaltschienen 32 eingreift (siehe Fig. 1). Hebel 28, Hohlwelle 52 und Schaltwelle 44 werden durch wenigstens einen Stift 66 durchdrungen. Die Hohlwelle 52 weist in diesem Bereich zwei Langlöcher 64 auf. Die Breite der Langlöcher 64 in Umfangrichtung der Hohlwelle 52 entspricht nahezu dem Durchmesser des Stiftes 66. Der Stift 66 wird beispielsweise durch Sicherungsringe 72 in seiner Lage gehalten. Die Schaltwelle 44 weist in diesem Bereich eine Bohrung auf, beispielsweise eine Schwenkbohrung. Durch die Schwenkbohrung entstehen zwischen der Schaltwelle 44 und dem Stift 66 entsprechende Spiele s, s'. Durch diese Spiele s, s' entstehen zwischen der Schaltwelle 44 und der Hohlwelle 52 entsprechende Verdrehspiele 68, 68'. Die Spiele s, s' können derart ausgebildet sein, dass beidseitig das gleiche Verdrehspiel 68, 68' bzw. dass unterschiedliche Verdrehspiele 68, 68' zwischen der Schaltwelle 44 und der Hohlwelle 52 entstehen. Die Spiele s, s' lassen sich also ebenfalls für eine wegabhängige Begrenzung der Servounterstützungskraft nutzen.

Die Schwenkbohrung durch die Schaltwelle 44, in welcher sich der Stift 66 befindet, kann auch als Langloch ausgebildet sein, wodurch in axialer Richtung der Schaltwelle 44 unterschiedlich große Spiele s, s' realisierbar sind. Weiterhin kann anstelle der Schwenkbohrung eine Nut in der Schaltwelle 44 vorgesehen sein, um unterschiedlich große Spiele s, s' zwischen Schaltwelle 44 und Stift 66 darzustellen, wobei der Stift 66 hierbei geteilt ist. Durch eine entsprechende Ausbildung des Langlochs bzw. der Nut kann für jede Gasse bzw. jeden Gang eine entsprechende Servounterstützungskraft erzeugt werden, wobei die Wählbewegung hierbei nicht durch die Schaltwelle 44, sondern über ein hier nicht dargestelltes Element auf den Hebel 28 übertragen wird.

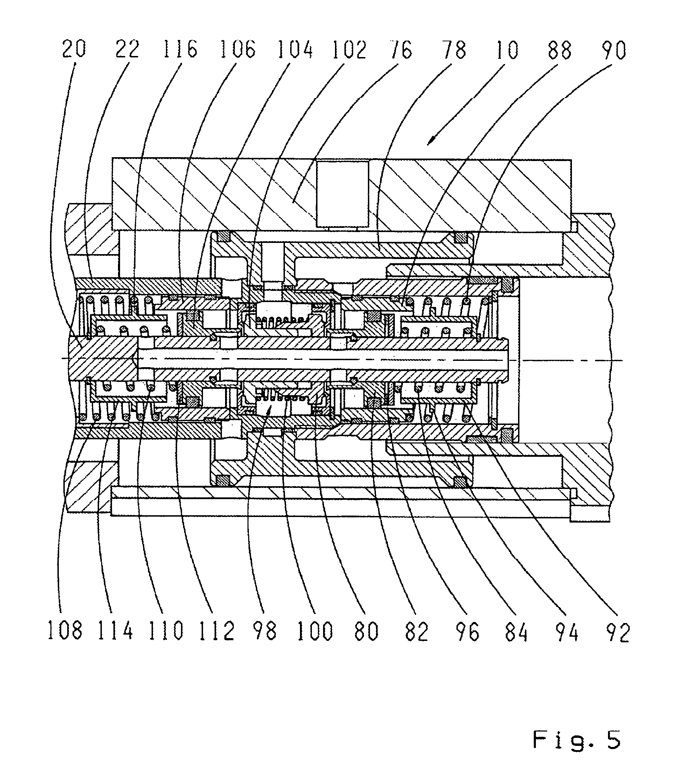

Die Fig. 5 zeigt in Schnittdarstellung einen Ausschnitt der Servounterstützungseinrichtung 10. Die Servounterstützungseinrichtung 10 umfasst eine Steuerstange 20 und eine Kolbenstange 22 sowie einen Zylinder 76 und einen Kolben 78. Die Steuerstange 20 der Servounterstützungseinrichtung 10 ist axial verschiebbar innerhalb der Kolbenstange 22 angeordnet und wirkt über ein Schaltgestänge mit einem Schalthebel zusammen (siehe Fig. 1). Die Kolbenstange 22 wirkt mit Mitteln zum Schalten des Zahnräderwechselgetriebes zusammen (siehe Fig. 1). Der Kolben 78 und die Kolbenstange 22 sind fest miteinander verbunden bzw. aus einem Bauteil gefertigt. Ein Ventil 98 besteht aus Ventilkolben 82, 104 und Ventilschiebern 80, 102. Die Ventilkolben 82, 104 sind hier auf der Steuerstange 20 gegen eine Federkraft von Federelementen 84, 110 axial verschiebbar angeordnet und werden in nicht betätigtem Zustand der Servounterstützungseinrichtung 10 durch die Federelemente 84, 110 in ihrer Ausgangslage gehalten. Die Federelemente 84, 110 sind hier als Spiralfedern ausgebildet und können beispielsweise auch vorgespannt in der Servounterstützungseinrichtung angeordnet sein. Zwischen den Ventilkolben 82, 104 sind die Ventilschieber 80, 102 ebenfalls axial verschiebbar angeordnet. Die Ventilschieber 80, 102 werden durch ein Federelement 100 axial auseinander gehalten und liegen je an einem Ventilsitz der Kolbenstange 22 an. Die Servounterstützungseinrichtung 10 weist hier zwei Schleppkolben 88, 106 und Schleppkolbenfedern 90, 108 auf. Die Schleppkolben 88, 106 sind hier in Form eines Hohlzylinders ausgebildet und derart in der Servounterstützungseinrichtung angeordnet, dass sie sowohl die Steuerstange 20 als auch die Ventilkolben 82, 104 umgeben und in axialer Richtung zur Steuerstange 20 verschiebbar sind. Die Schleppkolbenfedern 90, 108 sind hier als Spiralfedern ausgebildet und liegen mit ihrem einen Ende an einem Anschlag der Kolbenstange 22 und mit ihrem anderen Ende an den Schleppkolben 88, 106 an. Der Anschlag der Kolbenstange 22 ist hier über Sicherungsringe dargestellt, kann aber auch mit der Kolbenstange einstückig ausgebildet sein. In nicht betätigtem Zustand der Servounterstützungseinrichtung 10 liegen die Ventilschieber 80, 102 an den Ventilsitzen der Kolbenstange 22 an und die Schleppkolben 88, 106 werden durch die Schleppkolbenfedern 90, 108 gegen entsprechende Anschläge der Kolbenstange 22 gedrückt. An den Ventilkolben 82, 104 können zusätzlich noch Elemente 96, 112 angeordnet sein, welche beispielsweise scheibenförmig ausgebildet sind. In der Servounterstützungseinrichtung sind Anschlagelemente 92, 114 angeordnet, welche hier über Sicherungsringe und die Federelemente 84, 110 auf der Steuerstange 20 fixiert werden. Die Anschlagelemente 92, 114 sind hier topfförmig ausgebildet und weisen Anschläge 94, 116 auf.

Wird die Steuerstange 20 aufgrund einer Handschaltkraft in der Zeichenblattebene nach links bewegt, wird auch der auf der Steuerstange 20 angeordnete Ventilkolben 82 nach links bewegt. Durch den Ventilkolben 82 wird der Ventilschieber 80 betätigt, wodurch sich dieser vom Ventilsitz der Kolbenstange 22 löst und das Ventil 98 öffnet. Das geöffnete Ventil 98 regelt mittels eines vorhandenen Vorratdrucks einen Servodruck entsprechend zur vorherrschenden Steuerstangenkraft ein. Wird nun die Steuerstange 20 durch Erhöhen der Handschaltkraft weiter nach links bewegt, so bleibt der Ventilkolben 82 und der Ventilschieber 80 auf Grund des erreichten Kräftegleichgewichts auf ihren zuvor erreichten geöffneten Positionen stehen, während sich die Steuerstange 20 relativ zu diesen beiden weiterbewegt und das Federelement 84 weiter komprimiert wird. Dabei stellt sich immer wieder ein neues Kräftegleichgewicht ein, wodurch sich ein entsprechender Verlauf der Servokraft ergibt. Durch das Federelement 84 ist somit eine interne Servodruckbegrenzung realisierbar.

Ist die durch den geregelten Servodruck auf den Schleppkolben 88 wirkende Druckkraft kleiner als die von der Schleppkolbenfeder 90 erzeugte Kraft, dann liegt der Schleppkolben 88 weiterhin am Anschlag der Kolbenstange 22 an und die Schleppkolbenfeder 90 wird nicht komprimiert. Der Handschaltkraft bzw. Steuerstangenkraft wirkt somit lediglich die auf den Ventilkolben 82 wirkende Druckkraft entgegen, was einer Regelstellung im Bereich der steilen Servokennlinie entspricht.

Wird nun die Steuerstange 20 durch eine größere Handschaltkraft in der Zeichenblattebene weiter nach links bewegt, dann wird der Ventilschieber 80 durch den Ventilkolben 82 ebenfalls weiter nach links verschoben, wodurch das Ventil 98 mehr öffnet. Dadurch entsteht ein entsprechend höherer Servodruck. Ist der geregelte Servodruck nun so groß, dass die Schleppkolbenfeder 90 durch den Schleppkolben 88 komprimiert wird und der Schleppkolben 88 gegen die Kraft der Schleppkolbenfeder 90 auf den Anschlag 94 des Anschlagelements 92 gedrückt wird, dann wirkt der Handschaltkraft bzw. Steuerstangenkraft sowohl die auf den Ventilkolben 82 direkt wirkende Druckkraft entgegen, als auch die Druckkraft, welche über den Schleppkolben 88 und das Anschlagelement 92 auf die Steuerstange 20 übertragen wird. Dadurch wird die der Handschaltkraft bzw. Steuerstangenkraft entgegenwirkende Druckkraft größer und die Kennlinie weist einen Knickpunkt auf. Diese Regelstellung entspricht dem Bereich der flacheren Kennlinie. Die Position der Steuerstange 20 und des Ventilkolbens 82 verändert sich hierbei nicht, wodurch die "geknickte" Kennlinie wegunabhängig realisierbar ist.

Wird der geregelte Servodruck nun so groß, dass der Ventilkolben 82 gegen die Federkraft des Federelements 84 auf das Anschlagelement 92 gedrückt wird, dann weist die Servokennlinie einen Verlauf auf, welcher einem Servokennlinienverlauf entspricht, bei dem der Ventilkolben 82 fest auf der Steuerstange 20 angeordnet ist.

Analoges gilt für eine Betätigung der Steuerstange 20 in der Zeichenblattebene nach rechts. Hierbei wird der Ventilschieber 102 durch den Ventilkolben 104 betätigt, wodurch sich der Ventilschieber 102 vom Ventilsitz der Kolbenstange 22 löst und somit das Ventil 98 öffnet.

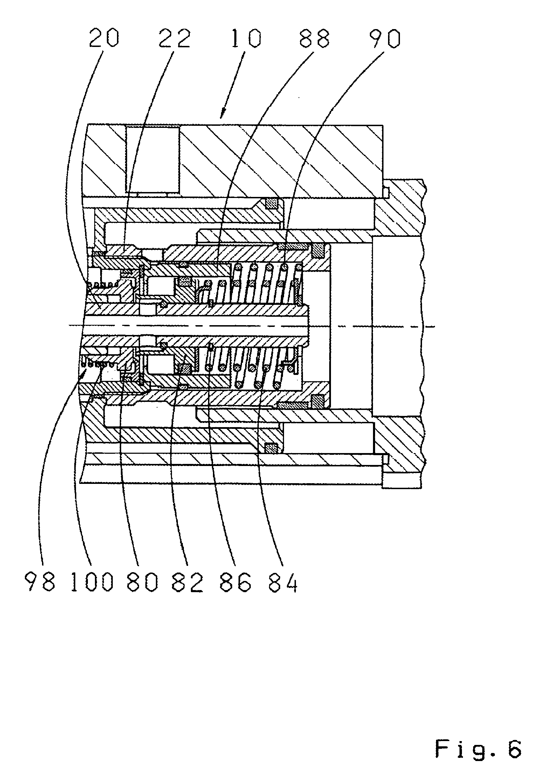

Die Fig. 6 zeigt einen Ausschnitt einer weiteren Ausführungsform der Servounterstützungseinrichtung 10 in Schnittdarstellung. Die Funktionsweise dieser Ausführungsform entspricht der Funktionsweise der Ausführungsform wie in der Fig. 5 beschrieben. Im Unterschied zu der in der Fig. 5 dargestellten Ausführungsform weist der als Hohlzylinder ausgebildete Schleppkolben 88 an der der Schleppkolbenfeder 90 gegenüberliegenden Seite einen in Richtung zur Steuerstange 20 hin ausgebildeten Anschlag auf. Der Anschlag kann beispielsweise mit dem Schleppkolben 88, 106 aus einem Bauteil gefertigt sein. Der Schleppkolben 88 ist auch hier derart angeordnet, dass er sowohl die Steuerstange 20 als auch den Ventilkolben 82 umgibt und in axialer Richtung zur Steuerstange 20 gegen die Federkraft des Federelements 90 verschiebbar ist. Ab einer bestimmten Handschaltkraft wird der geregelte Servodruck so groß, dass der Schleppkolben 88 gegen die Schleppkolbenfederkraft auf den Ventilkolben 82 gedrückt wird. Der Handschaltkraft bzw. Steuerstangenkraft wirkt somit sowohl die auf den Ventilkolben 82 direkt wirkende Druckkraft entgegen, als auch die Druckkraft, welche über den Schleppkolben 88 auf den Ventilkolben 82 übertragen wird. Somit wird ab einer bestimmten Regelstellung die der Handschaltkraft bzw. Steuerstangenkraft entgegenwirkende Druckkraft entsprechend vergrößert, wodurch die Servokennlinie einen Knickpunkt aufweist, ab welchem sie eine kleinere Steigung aufweist und somit flacher verläuft. Die axiale Bewegung des Ventilkolbens 82 in Richtung des Federelements 84 wird hier durch einen Anschlag 86 begrenzt, der beispielsweise als Sicherungsring ausgebildet und fest auf der Steuerstange 20 angeordnet ist.

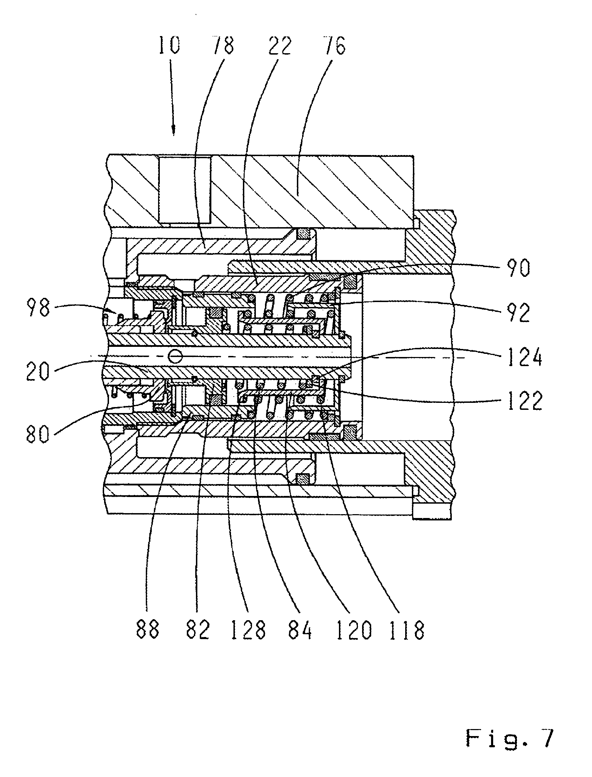

Die Fig. 7 zeigt in Schnittdarstellung eine Ausführungsform der erfindungsgemäßen Servounterstützungseinrichtung 10, bei welcher eine Servounterstützungskraft auf zwei unterschiedliche Servokraftniveaus begrenzt werden kann. Für gleiche Elemente werden in der nachfolgenden Beschreibung die gleichen Bezugszeichen verwendet, wie in der Beschreibung der Fig. 5.

Im Unterschied zur Fig. 5 weist die Servounterstützungseinrichtung 10 ein weiteres Federelement 118 und weitere Anschlagelemente 120, 122, 124 auf. Das Anschlagelement 124 ist fest auf der Steuerstange 20 der Servounterstützungseinrichtung 10 angeordnet. Das Federelement 84 ist hier derart auf der Steuerstange 20 angeordnet, dass es bei nicht betätigter Servounterstützungseinrichtung 10 zwischen dem Ventilkolben 82 und dem Anschlagelement 124 fixiert ist. Eine Anschlagscheibe 122 zwischen dem Anschlagelement 124 und dem Federelement 84 kann als Anlagefläche für das Federelement 84 dienen. Das Anschlagelement 120 ist topfförmig ausgebildet, weist einen nach radial außen weisenden Anschlag 128 auf und ist in radialer Richtung zur Steuerstange 20 zwischen dem Federelement 84 und dem Federelement 118 angeordnet. Das Federelement 118 ist in radialer Richtung zur Steuerstange 20 zwischen den Anschlagelementen 92 und 120 angeordnet und wird bei nicht betätigter Servounterstützungseinrichtung 10 zwischen dem Anschlagelement 92, welches auch als Anlagefläche für den Schleppkolben 88 dient, und dem Anschlag 128 des Anschlagelements 120 fixiert, wodurch das Anschlagelement 120 an dem Anschlagelement 124 anliegt.

Wird die Steuerstange 20 der Servounterstützungseinrichtung 10 durch eine einwirkende Handschaltkraft in der Zeichenblattebene nach links bewegt, so wird das Ventil 98 durch den Ventilkolben 82 geöffnet. Wird bei geöffnetem Ventil 98 ein Druckniveau erreicht, welches größer ist als die von dem Federelement 84 auf den Ventilkolben 82 wirkende Federkraft, dann bewegt sich der Ventilkolben 82 relativ zur Steuerstange 20, bis die Wegbegrenzung in der Ansteuerung der Servounterstützungseinrichtung 10 wirksam wird, also bis die Servounterstützungseinrichtung 10 mechanisch überbrückt wird (siehe vorangegangene Beschreibung). Hierdurch wird ein erstes Servokraftniveau erzeugt, welches beispielsweise in der Gasse der Gangstufe 5/6 eines 6-Gang-Hauptgetriebes wirksam ist.

Wird nun in eine andere Gasse gewählt, beispielsweise in die Gasse der Gangstufe 3/4 des 6-Gang-Hauptgetriebes, so ist ein zweites Servokraftniveau erzeugbar. Hierfür ist die Wegbegrenzung in der Ansteuerung der Servounterstützungseinrichtung 10 derart ausgebildet, dass beispielsweise zwischen der Schaltwelle und der Nut in der Hohlwelle in der Gasse der Gangstufe 3/4 ein größeres Verdrehspiel existiert, als in der Gasse der Gangstufe 5/6 des 6-Gang-Hauptgetriebes (siehe vorangegangene Beschreibung), wodurch der Steuerstange 20 der Servounterstützungseinrichtung 10 ein größerer Betätigungsweg zur Verfügung steht, bevor die Servounterstützungseinrichtung 10 mechanisch überbrückt wird und der Ventilkolben 82 sich relativ zur Steuerstange 20 solange weiter bewegt, bis dieser am Anschlagelement 120 zur Anlage kommt. Wird nun die Handschaltkraft weiter gesteigert, so macht der Ventilkolben 82 relativ zur Steuerstange 20 keinen Weg mehr, bis ein Servokraftniveau erreicht wird, welches der Summe der Federkräfte entspricht, die von den Federelementen 118 und 120 auf den Ventilkolben 82 wirkt. Wird nun die Handschaltkraft noch weiter gesteigert, dann bewegt sich der Ventilkolben 82 aufgrund des erhöhten Servokraftniveaus relativ zur Steuerstange 20 bis auch hier die Servounterstützungseinrichtung 10 durch die Wegbegrenzung in der Ansteuerung der Servounterstützungseinrichtung 10 mechanisch überbrückt wird.

Durch die Anordnung des Anschlagelements 120 und des Federelements 118 in der Servounterstützungseinrichtung 10 kann die Servounterstützungskraft auf zwei unterschiedliche Servokraftniveaus begrenzt werden, ohne die Abmessungen bzw. den Bauraum der Servounterstützungseinrichtung 10 zu vergrößern.

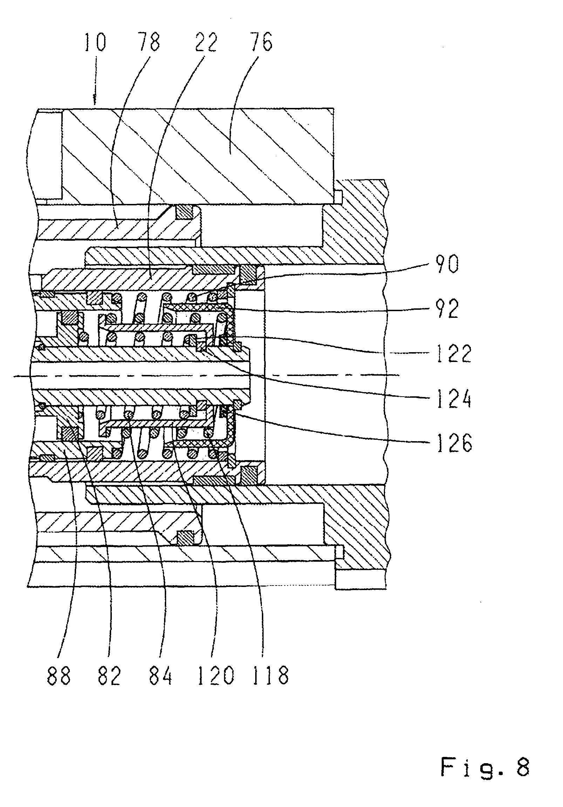

Die Fig. 8 zeigt die Servounterstützungseinrichtung 10 nach Fig. 7, mit dem Unterschied, dass in axialer Richtung der Steuerstange 20 zwischen den beiden Anschlagelementen 92 und 120 ein weiteres Anschlagelement 126 angeordnet ist, welches hier ringförmig ausgebildet ist. Ausgehend von der Fig. 7 wird von der Gasse der Gangstufe 3/4 in die Gasse der Gangstufe 1/2 des 6-Gang-Hauptgetriebes gewählt. Die Wegbegrenzung in der Ansteuerung der Servounterstützungseinrichtung 10 ist hier derart ausgebildet, dass in der Gasse der Gangstufe 1/2 ein noch größeres Verdrehspiel existiert, als in der Gasse der Gangstufe 3/4 des 6-Gang-Hauptgetriebes.

Wird nun die Handschaltkraft noch weiter gesteigert, so wird der Ventilkolben 82 relativ zur Steuerstange 20 solange bewegt, bis er über das Anschlagelement 120 an dem Anschlagelement 126 anliegt und somit relativ zur Steuerstange 20 keinen Weg mehr machen kann. Dadurch kann ein drittes Servokraftniveau erzeugt werden, welches beispielsweise dem im Kraftfahrzeug vorhandenen Vorratsdruck entspricht. Somit ist beispielsweise eine Schaltung der Gangstufe 1 mit unbegrenztem Vorratsdruck möglich.

### Bezugszeichen

- 2: Schaltanlage
- 4: Schalthebel
- 6: Schaltstange
- 8: Hebelumlenkung
- 10: Servounterstützungseinrichtung
- 11: Schaltvorrichtung
- 12: Anschlussleitung
- 14: Vorratsbehälter
- 16: Hebel
- 18: Hebel
- 20: Steuerstange
- 22: Kolbenstange
- 24: Hebel
- 26: Schaltwelle
- 28: Hebel
- 30: Fahrzeuggetriebe
- 32: Schaltschiene
- 38: Stift
- 40: Schaltvorrichtung
- 42: Bohrung
- 44: Schaltwelle
- 46: Nut
- 48: Nut
- 52: Hohlwelle
- 54: Nut
- 56: Stift
- 58: Nadelbüchse
- 60: Rolle
- 62: Lager
- 64: Langloch
- 66: Stift
- 68: Verdrehspiel
- 68': Verdrehspiel
- 70: Tasche
- 72: Sicherungsring
- 74: Fortsatz
- 76: Zylinder
- 78: Kolben
- 80: Ventilschieber
- 82: Ventilkolben
- 84: Federelement
- 86: Anschlagelement
- 88: Schleppkolben
- 90: Schleppkolbenfeder
- 92: Anschlagelement
- 94: Anschlag
- 96: Scheibe
- 98: Ventil
- 100: Federelement
- 102: Ventilschieber
- 104: Ventilkolben
- 106: Schleppkolben
- 108: Schleppkolbenfeder
- 110: Federelement
- 112: Scheibe
- 114: Anschlagelement
- 116: Anschlag
- 118: Federelement
- 120: Anschlagelement
- 122: Anschlagscheibe
- 124: Anschlagelement
- 126: Anschlagelement
- 128: Anschlag

- s: Spiel
- s': Spiel

## Patentansprüche

1. Schaltvorrichtung (11, 40) mit Servounterstützungseinrichtung (10), insbesondere für ein Getriebe (30) eines Kraftfahrzeugs, welche Mittel zum Wählen und Schalten einer Gangstufe des Getriebes (30) und ein Element (20) umfasst, auf das eine zu unterstützende Handschaltkraft einwirkt, wobei mit der Servounterstützungseinrichtung (10) eine Kennlinie darstellbar ist, welche In Abhängigkeit der Handschaltkraft bzw. einer Schaltungsphase Bereiche mit unterschiedlicher Steigung bzw. Proportionalität zur Handschaltkraft aufweist und
die Servounterstützungseinrichtung (10) eine Kolbenstange (22), welche mit Mitteln zum Schalten des Getriebes (30) zusammenwirkt und ein Ventil (98) umfasst, welches einen Ventilkolben (82, 104) und einen Ventilschieber (80, 102) aufweist, sowie das Element (20) als Steuerstange der Servounterstützungseinrichtung (10) ausgebildet ist, **dadurch gekennzeichnet, dass** die Schaftvorrichtung (11, 40) eine Schaltwelle (44) und eine Hohlwelle (52) umfasst und in der Servounterstützungseinrichtung (10) zur Darstellung der Kennlinie ein mit dem Ventil (98) zusammenwirkender Schleppkolben (88, 106) und eine Schleppkolbenfeder (90, 108) vorhanden sind, auf die ein Servodruck wirkt und dass eine Wegbegrenzung in der Ansteuerung der Servounterstützungseinrichtung (10) sowie mindestens eine Nachgiebigkeit (84, 110) vor und/oder in der Servounterstützungseinrichtung (10) vorgesehen sind, um eine Servounterstützungskraft wegabhängig für jede Gasse bzw. jeden Gang zu begrenzen, wobei der Schleppkolben (88, 106) innerhalb der Kolbenstange (22) angeordnet ist, die Steuerstange (20) und den Ventilkolben (82, 104) umgibt und an einem Anschlag der Kolbenstange (22) anliegt und die Schleppkolbenfeder (90, 108) einerseits an einem Anschlag der Kolbenstange (22) anliegt und andererseits mit dem Schleppkolben (88, 106) in Verbindung steht.
(Weiter auf Ersatzblatt 24 der am 27.03.2009 eingereichten Unterlagen.)

2. Schaltvorrichtung (11, 40) mit Servounterstützungseinrichtung (10) nach Anspruch 1, **dadurch gekennzeichnet, dass** der Schleppkolben (88, 106) in Form eines Hohlzylinders ausgebildet ist und an der der Schleppkolbenfeder (90,108) gegenüberliegenden Seite einen in Richtung zur Steuerstange (20) hin ausgebildeten Anschlag aufweist.

3. Schaltvorrichtung (11, 40) mit Servounterstützungseinrichtung (10) nach Anspruch 1, **dadurch gekennzeichnet, dass** der Schleppkolben (88, 106) in Form eines Hohlzylinders ausgebildet ist und in betätigtem Zustand auf einen Anschlag (94, 116) eines auf der Steuerstange (20) angeordneten Anschlagelements (92, 114) wirkt.

4. Schaftvorrichtung (11, 40) mit Servounterstützungseinrichtung (10) nach Anspruch 1, **dadurch gekennzeichnet, dass** die Wegbegrenzung durch unterschiedliche Verdrehspiele zwischen mindestens einem Stift (56, 38) und einer Nut in der Hohlwelle (52) realisierbar ist.

5. Schattvorrichtung (11, 40) mit Servounterstützungseinrichtung (10) nach Anspruch 1, **dadurch gekennzeichnet, dass** die Wegbegrenzung durch unterschiedliche Verdrehspiele zwischen mindestens einem Stift (56) und einer Nut (54) in der Schaltwelle (44) realisierbar ist.

6. Schaltvorrichtung (11, 40) mit Servounterstützungseinrichtung (10) nach Anspruch 4 oder 5, **dadurch gekennzeichnet, dass** die Verdrehspiele an die jeweiligen Gassen bzw. Gangstufen des Getriebes (30) angepasst sind.

7. Schaltvorrichtung (11, 40) mit Servounterstützungseinrichtung (10) nach Anspruch 1, **dadurch gekennzeichnet, dass** die Wegbegrenzung durch Spiele (s, s') zwischen der Schaltwelle (44) und einem Stift (66) realisierbar ist, wobei sich entsprechende Verdrehspiele (68, 68') zwischen der Schaltwelle (44) und der Hohlwelle (52) ergeben.

8. Schaltvorrichtung (11, 40) mit Servounterstützungseinrichtung (10) nach Anspruch 7, **dadurch gekennzeichnet, dass** die Spiele (s, s') zwischen der Schaltwelle (44) und dem Stift (66) über ein Langloch bzw. eine Nut in der Schaltwelle (44) realisierbar sind.

9. Schaltvorrichtung (11, 40) mit Servounterstützungseinrichtung (10) nach wenigstens einem der vorangegangenen Ansprüche, **dadurch gekennzeichnet, dass** in der Servounterstützngseinrichtung (10) Mittel (118, 120, 124, 128) vorhanden sind, durch welche die Servounterstützungskraft auf zumindest zwei unterschiedliche Servokraftniveaus begrenzbar ist

## Claims

1. Shifting device (11, 40) with servo assistance unit (10), in particular for a gearbox (30) of a motor vehicle, which shifting device comprises means for selecting and shifting a gear stage of the gearbox (30) and an element (20) on which a manual shift force to be assisted acts, wherein with the servo assistance unit (10), a characteristic curve can be formed which has regions with different gradient or proportionality to the manual shift force as a function of the manual shift force or a shift phase, and wherein the servo assistance unit (10) comprises a piston rod (22), which interacts with means for shifting the gearbox (30), and a valve (98) which has a valve piston (82, 104) and a valve slide (80, 102), and wherein the element (20) is designed as a control rod of the servo assistance unit (10), **characterized in that** the shifting device (11, 40) comprises a shift shaft (44) and a hollow shaft (52) and, in the servo assistance unit (10), to form the characteristic curve, provision is made of a dragging piston (88, 106), which interacts with the valve (98), and a dragging piston spring (90, 108) which are acted on by a servo pressure, and **in that** a travel delimitation is provided in the activation of the servo assistance unit (10), and at least one flexibility (84, 110) is provided upstream of and/or in the servo assistance unit (10), in order to limit a servo assistance force in a travel-dependent manner for each shift lane or each gear, with the dragging piston (88, 106) being arranged within the piston rod (22), surrounding the control rod (20) and the valve pistons (82, 104), and bearing against a stop of the piston rod (22), and with the dragging piston spring (90, 108) bearing at one side against a stop of the piston rod (22) and being connected at the other side to the dragging piston (88, 106).

2. Shifting device (11, 40) with servo assistance unit (10) according to Claim 1, **characterized in that** the dragging piston (88, 106) is formed as a hollow cylinder and has, on the side situated opposite the dragging piston spring (90, 108), a stop formed in the direction of the control rod (20).

3. Shifting device (11, 40) with servo assistance unit (10) according to Claim 1, **characterized in that** the dragging piston (88, 106) is formed as a hollow cylinder and, in the actuated state, acts on a stop (94, 116) of a stop element (92, 114) arranged on the control rod (20).

4. Shifting device (11, 40) with servo assistance unit (10) according to Claim 1, **characterized in that** the travel delimitation can be realized by means of different rotational plays between at least one pin (56, 38) and a groove in the hollow shaft (52).

5. Shifting device (11, 40) with servo assistance unit (10) according to Claim 1, **characterized in that** the travel delimitation can be realized by means of different rotational plays between at least one pin (56) and a groove (54) in the shift shaft (44).

6. Shifting device (11, 40) with servo assistance unit (10) according to Claim 4 or 5, **characterized in that** the rotational plays are adapted to the respective shift lanes or gear stages of the gearbox (30).

7. Shifting device (11, 40) with servo assistance unit (10) according to Claim 1, **characterized in that** the travel delimitation can be realized by means of plays (s, s') between the shift shaft (44) and a pin (66), with corresponding rotational plays (68, 68') being generated between the shift shaft (44) and the hollow shaft (52).

8. Shifting device (11, 40) with servo assistance unit (10) according to Claim 7, **characterized in that** the plays (s, s') between the shift shaft (44) and the pin (66) can be realized by means of a slot or a groove in the shift shaft (44).

9. Shifting device (11, 40) with servo assistance unit (10) according to at least one of the preceding claims, **characterized in that**, in the servo assistance unit (10), means (118, 120, 124, 126) are provided with which the servo assistance force can be limited to at least two different servo force values.

## Revendications

1. Dispositif de changement de vitesse (11, 40) comprenant un dispositif d'assistance par asservissement (10), notamment pour une boîte de vitesses (30) d'un véhicule automobile, qui comprend des moyens pour sélectionner et changer un rapport de vitesse de la boîte de vitesses (30) et un élément (20) sur lequel agit une force de changement de vitesse manuelle à assister, le dispositif d'assistance par asservissement (10) permettant d'établir une courbe caractéristique qui présente, en fonction de la force de changement de vitesse manuelle ou d'une phase de changement de vitesse, des régions de pente ou de proportionnalité différente par rapport à la force de changement de vitesse manuelle, et le dispositif d'assistance par asservissement (10) comprenant une tige de piston (22), qui coopère avec des moyens pour commuter la boîte de vitesses (30) et une soupape (98) qui présente un piston de soupape (82, 104) et un poussoir de soupape (80, 102), et l'élément (20) étant réalisé sous forme de tige de commande du dispositif d'assistance par asservissement (10), **caractérisé en ce que** le dispositif de changement de vitesse (11, 40) comprend un arbre de sélection (44) et un arbre creux (52) et dans le dispositif d'assistance par asservissement (10), pour constituer la courbe caractéristique, étant prévus un piston d'entraînement (88, 106) coopérant avec la soupape (98) et un ressort de piston d'entraînement (90, 108), sur lesquels agit une pression d'asservissement et **en ce qu'**une limitation de course est prévue dans la commande du dispositif d'assistance par asservissement (10) ainsi qu'une flexibilité (84, 110) avant et/ou dans le dispositif d'assistance par asservissement (10), afin de limiter une force d'assistance par asservissement en fonction de la course pour chaque voie ou chaque vitesse, le piston d'entraînement (88, 106) étant disposé à l'intérieur de la tige de piston (22), entourant la tige de commande (20) et le piston de soupape (82, 104), et s'appliquant contre une butée de la tige de piston (22), et le ressort de piston d'entraînement (90, 108)s'appliquant d'une part contre une butée de la tige de piston (22) et étant d'autre part en liaison avec le piston d'entraînement (88, 106).

2. Dispositif de changement de vitesse (11, 40) comprenant un dispositif d'assistance par asservissement (10) selon la revendication 1, **caractérisé en ce que** le piston d'entraînement (88, 106) est réalisé sous forme d'un cylindre creux et présente, du côté opposé au ressort de piston d'entraînement (90, 108), une butée réalisée dans la direction de la tige de commande (20).

3. Dispositif de changement de vitesse (11, 40) comprenant un dispositif d'assistance par asservissement (10) selon la revendication 1, **caractérisé en ce que** le piston d'entraînement (88, 106) est réalisé sous forme d'un cylindre creux et agit, dans l'état activé, sur une butée (94, 116) d'un élément de butée (92, 114) disposé sur la tige de commande (20).

4. Dispositif de changement de vitesse (11, 40) comprenant un dispositif d'assistance par asservissement (10) selon la revendication 1, **caractérisé en ce que** la limitation de course peut être réalisée par différents jeux de rotation entre au moins une goupille (56, 38) et une rainure dans l'arbre creux (52).

5. Dispositif de changement de vitesse (11, 40) comprenant un dispositif d'assistance par asservissement (10) selon la revendication 1, **caractérisé en ce que** la limitation de course peut être réalisée par différents jeux de rotation entre au moins une goupille (56) et une rainure (54) dans l'arbre de sélection (44).

6. Dispositif de changement de vitesse (11, 40) comprenant un dispositif d'assistance par asservissement (10) selon la revendication 4 ou 5, **caractérisé en ce que** les jeux de rotation sont adaptés aux voies ou rapports de vitesse respectifs de la boîte de vitesses (30).

7. Dispositif de changement de vitesse (11, 40) comprenant un dispositif d'assistance par asservissement (10) selon la revendication 1, **caractérisé en ce que** la limitation de course peut être réalisée par des jeux (s, s') entre l'arbre de sélection (44) et une goupille (66), des jeux de rotation correspondants (68, 68') en résultant entre l'arbre de sélection (44) et l'arbre creux (52).

8. Dispositif de changement de vitesse (11, 40) comprenant un dispositif d'assistance par asservissement (10) selon la revendication 7, **caractérisé en ce que** les jeux (s, s') entre l'arbre de sélection (44) et la goupille (66) peuvent être réalisés par le biais d'un trou oblong ou d'une rainure dans l'arbre de sélection (44).

9. Dispositif de changement de vitesse (11, 40) comprenant un dispositif d'assistance par asservissement (10) selon au moins l'une quelconque des revendications précédentes, **caractérisé en ce que** des moyens (118, 120, 124, 126) sont prévus dans le dispositif d'assistance par asservissement (10), lesquels permettent de limiter la force d'assistance par asservissement à au moins deux niveaux de force d'asservissement différents.
